(19) Europäisches Patentamt

European Patent Office

Office européen des brevets

(11) **EP 1 617 693 A1**

(12) **EUROPEAN PATENT APPLICATION**

(43) Date of publication:
**18.01.2006 Bulletin 2006/03**

(51) Int Cl.:
*H04Q 7/38* (2006.01)        *G01S 5/00* (2006.01)

(21) Application number: **05015084.6**

(22) Date of filing: **12.07.2005**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority: **14.07.2004 JP 2004206664**

(71) Applicant: **NEC CORPORATION
Tokyo (JP)**

(72) Inventor: **Inaba, Arata
Tokyo (JP)**

(74) Representative: **Vossius & Partner
Siebertstrasse 4
81675 München (DE)**

(54) **Position information providing system, base station and position information providing method for use therewith**

(57)    An object of the present invention is to provide a base station that can expand a position information providing service in the closed range of a single cell. The base station stores the transmission time in a transmission time storing part, calculates the RTT in an RTT calculating part , employing a received signal from a mobile station, and calculates the distance from a calculated time stamp in a distance measuring part. The base station calculates a fading correlation value employing a channel estimated value in a channel estimate calculating part, after the demodulation of DPCCH is completed in a DPCCH demodulating part, performs a speed calculating process in a speed calculating part, and performs a travel direction estimating process in a travel direction estimating part from the percentages of '0' and '1' in a bit string. If the base station estimates the distance, speed and travel direction, the optimal position information to be transmitted to the mobile station is decided in a transmission position information deciding part, employing a table within the transmission position information deciding part.

FIG. 1

## Description

The present invention relates to a position information providing system, a base station and a position information providing method for use therewith, and more particularly to a position providing service method employing a base station for a W-CDMA (Wideband-Code Division Multiple Access) radio communication system.

The positioning is an indispensable application in the mobile communication. The position information can be provided by measuring the position of a mobile station. In an Intelligent Transport System (ITS), a technology for providing the position information near a car in which an installed device of the car communicates with a radio communication system installed on a signal or a utility pole, etc. , has been researched and developed.

For instance, at a hot spot, there is increasing demand or concern for adequately providing the position information from a viewpoint of the user who has a mobile station to retrieve the position information in the vicinity of the hot spot. Consequently, the position information is simply provided in a limited small area of the ITS or at the hot spot, whereby a position information providing system for the mobile station that does not need to be managed at a radio network controller (hereinafter referred to as an upper level layer) is desired on a network using the cellular phone.

Moreover, the specification of the technology that measures the position of the mobile station has been standardized in a 3GPP (3rd Generation Partnership Project).

There is a GPS (Global Positioning System) as positioning service using the W-CDMA radio communication system. This is a technology for specifying the position from latitude and longitude of a mobile station having a GPS receiver mounted which communicates directly with the satellite. The GPS means the satellite for military purposes launched by the United States of America, and is also employed for private demands by virtue of a nature capable of measuring the latitude and longitude at present.

Moreover, for the 3GPP, a technology that measures the distance between the base station and the mobile station by using an OTDOA-IPDL (Observed Time Differential of Arrival-Idle Period Down Link) has already been standardized (e.g., refer to non-patent document 1).

Shortly, means (OTDOA-IPDL) for specifying the position of a mobile station by inserting IPDL and measuring the arrival time of a transmission wave from the base station to the mobile station has been examined in the 3GPP.

The position of the mobile station can be specified by applying this measurement method to a plurality of cells and drawing a circle of which the radius is the calculated distance. This technology is a method of presuming the intersection of a circle as the position of the mobile station by drawing the circle of which the radius is the distance between the base station and the mobile station (e.g., refer to non-patent document 2).

Moreover, AAA (Adaptive Array Antenna) is a technology that improves the reception characteristics from the mobile station by changing the directivity of antenna adaptively (e.g., refer to non-patent document 3). Concretely, this technology enables a signal from the mobile station to be taken out adaptively, even in the case of the propagation environment where the arrival direction from the mobile station changes, by installing a plurality of antennas, whose weights are adjusted adaptively, and turning the strongest directivity to the direction where the desired wave arrives, and turning part of no directivity (null) to the direction where the interference wave comes. This technology can be applied to the position measurement technique for the mobile station, because it is found from which direction the mobile station transmits information to the base station by this technology.

Besides the above-mentioned technologies, as a technology that improves the accuracy of TDOA ( Time Differential of Arrival ) , a method of calculating the true round trip time was proposed in which RTT (Round Trip Time) are measured in the base station and the mobile station to correct a propagation delay at the upper level layer (e.g., refer to patent document 1).

> [Patent document 1] International Application Published under PCT No. WO 01/89254
> [Non-patent document 1] 3GPP TR 25.305 v5.9.0
> [Non-patent document 2] IEICE TRANS. ON. COMMUNICATIONS. VOL. E85-B. No. 10, October, 2002 (pp.2068-2075)
> [Non-patent document 3] "Adaptive Signal Processing with Array Antenna" (written by Nobuyoshi Kikuma, Science and Technology Publishing)

However, since the conventional positioning service as above mentioned employs the GPS, it is required to employ a GPS network, besides the W-CDMA radio communication system, resulting a problem that the cost of the installation is increased.

Moreover, in the case of the OTDOA-IPDL using a plurality of cells in the conventional positioning service, it is required to control the timing synchronization of each cell and the IPDL insertion at the upper level layer, resulting a problem that the cost of the system is increased. Since two or more base stations are needed to specify the position of the mobile station by employing the OTDOA-IPDL, the timing of each base station must be synchronized at the upper level layer. The same problem may occur if the TDOA is based on, even though accurate round trip time can be measured with RTT like the technology of above-mentioned patent document 1.

In addition, the conventional positioning service has a problem that when the Idle section is made in a common channel with IPDL, other users within the cell that do not need positioning are affected by the lower cell capacity. In this case, since the IPDL needs to suspend a wave on a P-CCPCH (Primary-Common Control Physical CHannel) that is a common channel, the other users within the same cell that do not need positioning influence are affected. In addition, the conventional positioning service has a problem of having the necessity for newly installing an additional circuit in the existent device, when the technology employs the AAA.

Thus, an object of this invention is to resolve the above-mentioned problems, and to provide a position information providing system, a base station and a position information providing method for use therewith in which the position information providing service can be expanded in the closed range of a single cell.

The present invention provides a position information providing system for providing the position information from a base station to a mobile station, wherein the base station comprises estimation means for estimating the position information in a range of area within a sector.

Also, the invention provides a base station for providing the position information to a mobile station, comprising estimation means for estimating the position information in a range of area within a sector.

Also, the invention provides a position information providing method for providing the position information from a base station to a mobile station, comprising a step, on the side of the base station, of estimating the position information in a range of area within a sector.

Also, the invention provides a program for implementing a position information providing method for providing the position information from a base station to a mobile station, wherein the program enables a computer on the base station to perform a process for estimating the position information in a range of area within a sector.

That is, in the position information providing system of the invention, in order to provide the precise position information to the mobile station, the base station calculates the travel speed of the mobile station, employing the channel estimated value of a received signal from the mobile station, and further calculates the travel direction of the mobile station by storing the TPC (Transmission Power Control) bits in time series consecutively.

In the position information providing system of the invention, by employing the travel speed and the travel direction of the mobile station, the near position information is provided to the user moving at low speed, and the distant position information is provided to the user moving at high speed.

Further, in the position information providing system of the invention, the information of an SHO (Softer Hand Over) state is employed to estimate the position of the mobile station. Since the base station is informed whether or not the mobile station communicating with it is in the SHO state from the upper level layer, it is possible to determine whether or not the mobile station exists at the sector boundary in specifying the position within the sector, by employing this information.

As described above, in the position information providing system of the invention, if the mobile station communicates with the base station, the distance to the mobile station and its travel speed and direction can be known, whereby the optimal position information providing service can be expanded in accordance with the position information of the mobile station acquired employing the SHO state.

More specifically, in the position information providing system of the invention, the distance between the base station and the mobile station can be measured by measuring the RTT (Round Trip Time) on the communicating channel. Also, in the position information providing system of the invention, the dedicated channel and the common channel are not affected thereby. Further, in the position information providing system of the invention, the positioning is enabled only in the communicating sector, without requiring other sectors or cells. Herein, in the invention, the RTT means the round trip time simply calculated by the base station, although it is unnecessary to calculate the true round trip time by correcting the calculated round trip time in view of a propagation delay.

On the other hand, in the position information providing system of the invention, the azimuth angle as seen from the base station can be specified at narrower angle by estimating the speed and direction of the mobile station and managing the position of the mobile station in divided areas within the sector employing theSHOstate. Also, in the position information providing system of the invention, the precise position information service can be provided to the mobile station, employing that information, whereby the throughput is increased without the standing wave period.

Therefore, in the position information providing system of the invention , in order to resolve the above-mentioned problems , the distance to the mobile station can be calculated in the sector by calculating the RTT from a delay profile of the uplink, even in the situation without the GPS (Global Positioning System) or other cells. In a word, in the position information providing system of the invention, the position information can be provided only on the physical channel where the base station and the mobile station communicate without requiring the management on the upper level layer.

As described above, in the position information providing system of the invention, since it is unnecessary to transmit the positioning signal to a plurality of base stations, the position information providing service can be expanded in the closed range of a single cell.

Though in the prior art, it is required that the displacement information of speed and direction is acquired from the upper level layer, based on a temporal variation of the position information, in the position information providing system of the invention, the speed and direction information can be simply obtained by estimating those values only on the physical channel.

Also, in the position information providing system of the invention, when the position of the mobile station is managed in divided areas within the sector, it is unnecessary that the AAA (Adaptive Array Antenna) is mounted on the base station, because the SHO state is employed, whereby it is easy to switch over from the current device.

Moreover, in the position information providing system of the invention, the base station can discriminate whether the travel direction of the mobile station is approaching or not, whereby the mobile station can receive the position information providing service in accordance with its travel speed.

BRIEF DESCRIPTION OF THE DRAWINGS

FIG. 1 is a block diagram showing the configuration of a base station according to one embodiment of the present invention;
FIG. 2 is a diagram showing the channel format of DPCCH in a W-CDMA radio communication system;
FIG. 3 is a diagram showing an estimation method for estimating the travel direction of a mobile station according to one embodiment of the invention;
FIG. 4 is a diagram showing a transmission area according to one embodiment of the invention;
FIG. 5 is a diagram showing a configuration example of a table installed in a transmission position information deciding part of FIG. 1;
FIG. 6 is a flowchart showing the operation of the base station 1 according to one embodiment of the invention;
FIG. 7 is a flowchart showing a speed calculating process of FIG. 6; and
FIG. 8 is a flowchart showing a transmission area deciding process of FIG. 6.

DETAILED DESCRIPTION OF THE PREFERRED EMBODIMENTS

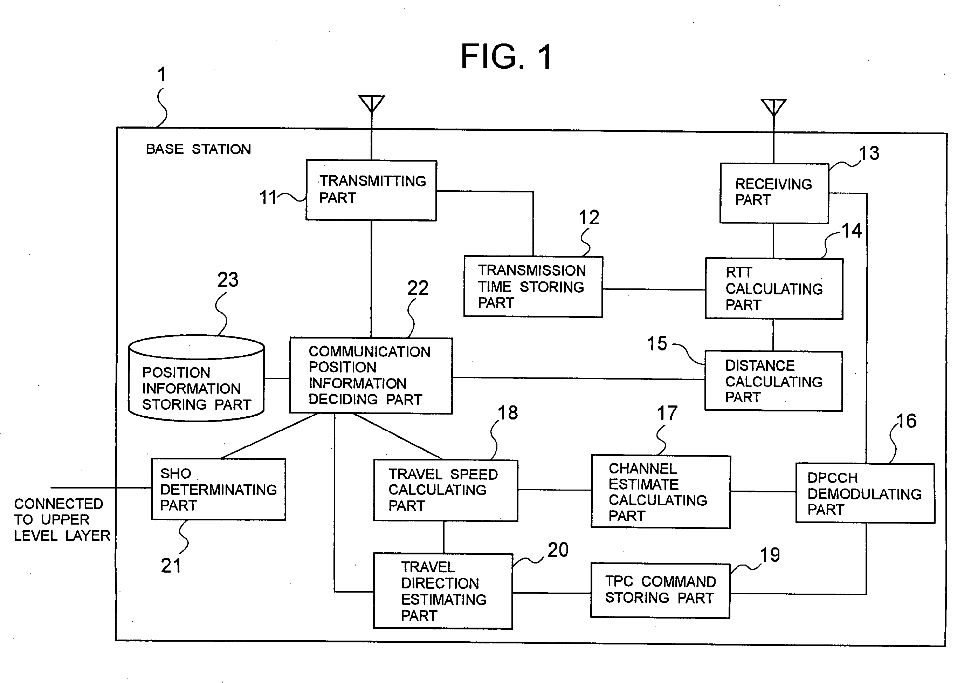

The preferred embodiments of the present invention will be described below with reference to the drawings. FIG. 1 is a block diagram showing the configuration of a base station according to one embodiment of the invention. In FIG. 1, the base station 1 comprises a transmitting part 11 that transmits data of position information, a transmission time storing part 12, a receiving part 13, an RTT (Round Trip Time) calculating part 14 for measuring the arrival time of the base station 1 and a mobile station (not shown), a distance calculating part 15 for calculating the distance to the mobile station, a DPCCH (Dedicated Physical Control CHannel) demodulating part 16, a channel estimate calculating part 17, a travel speed calculating part 18 for estimating the speed of the mobile station, a TPC (Transmission Power Control) command storing part 19, a travel direction estimating part 20 for estimating the travel direction of the mobile station, an SHO determinating part 21 for determining whether or not it is in an SHO (Softer Hand Over) state by communicating with the upper level layer, a transmission position information deciding part 22 for deciding the optimal position information to be transmitted to the mobile station from the estimated distance, speed and direction and the SHO state, and a position information storing part 23 for storing its position information.

In this embodiment, the distance between the base station 1 and the mobile station is measured employing the RTT, the transmission time is stored in the transmission time storing part 12, and the arrival time is measured in the receiving part 13. IntheW-CDMA (Wideband-CodeDivisionMultipleAccess) radio communication system, the base station 1 monitors the arrival time per 1/4 chip, for example.

In this embodiment, a time stamp (Timestamp) of receiving a positioning signal is calculated by measuring the arrival time. Thus, in this embodiment, the time stamp obtained from the transmission time storing part 12 and the time stamp calculated from the arrival time are sent to the distance calculating part 15 to calculate the distance to the mobile station. Assuming that Δ time is a difference between both time stamps, the distance D to the mobile station is calculated from the expression

$$D=(\triangle time \times c)/2$$

Where c is the velocity of light. The calculated distance is sent to the transmission position information deciding part 22 for deciding the optimal position information to be transmitted to the mobile station.

A method for estimating the speed of the mobile station will be described below. In this embodiment, the speed is calculated from the DPCCH transmitted from the mobile station. In this embodiment, the DPCCH is sent from the DPCCH receiving part 16 to the channel estimate calculating part 17, and then an estimation result of the channel estimate calculating part 17 is processed in the travel speed calculating part 18.

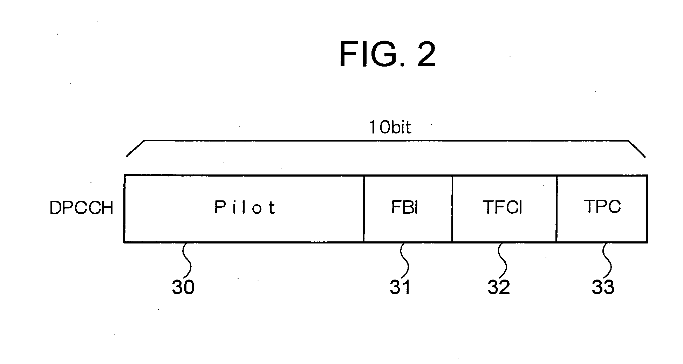

FIG. 2 is a diagram showing the channel format of the DPCCH in the W-CDMA radio communication system. In FIG. 2, the DPCCH in the W-CDMA radio communication system is composed of a Pilot 30, an FBI (Feed Back Information) 31, a TFCI (Transport Format Combination Indicator) 32 and a TPC 33 in a total of 10 bits.

Since the Pilot 30 is a normalized known signal, the channel estimate is calculated employing it. Assuming that the result of a hard decision for the Pilot 30 is D, the channel estimate h(m) in slot m is represented by the following expression.

$$h(m) = \frac{1}{N_p} \sum_{n=0}^{N_p-1} z(m,n)D^*(m,n)$$

Where $N_p$ is the number of bits in the Pilot 30. In the above expression D* denotes the complex conjugate of D.

When the channel estimate is calculated, the fading correlation value between slots is computed. The correlation value r(m) between slots (n slot delay) is represented, employing the channel estimate h(m), as follows.

$$r(m) = real\left(\frac{h(m)h*(m-n)}{|h(m)||h(m-n)|}\right)$$

In the above expression, the value of n is not necessarily restricted to one value, but plural values of n may be set to calculate the correlation value for each value of n. In the above expression, h* denotes the complex conjugate of h.

When the correlation between slots is computed, the final fading correlation value is computed by averaging in the measurement periods. Herein, it is supposed that a table listing the relationship between calculated fading correlation value and outputted travel speed is installed in the speed calculating part 18. The calculated travel speed, like the distance information, is sent to the transmission position information deciding part 22. Also, the calculated travel speed is sent to the travel direction estimating part 20 to estimate the arrival direction.

A method for estimating the travel direction will be described below. In the W-CDMA system, under the transmission power control, the mobile station transmits a TPC bit included in the DPCCH to the base station 1 so that the reception power of the mobile station in the downlink may be constant.

If the mobile station instructs the base station 1 to increase the transmission power, '1' is put into the TPC bit, and if the mobile station instructs the base station 1 to decrease the transmission power, '0' is put into the TPC bit. That is, since the reception power increases at the mobile station when the mobile station approaches the base station 1, an instruction for decreasing the transmission power at the base station is issued to offset the increased reception power, whereby TPC bit ='0' is transmitted to the base station 1. Conversely, when the mobile station becomes distant from the base station 1, TPC bit ='1' is transmitted.

In this embodiment, the TPC command storing part 19 is provided at a preceding stage of the travel direction estimating part 20 within the base station 1, to store received TPC bits in a certain interval continuously, whereby the final travel direction is decided in the travel direction estimating part 20, based on the percentages of '1' and '0' from TPC bit sequence and the information sent from the travel speed estimation part 18.

There is a method for estimating the travel direction which monitors the transmission power in a downlink on dedicated channel from the property of transmission power control. On the same principle as the TPC bit in an uplink as described above, if the mobile station is approaching, the transmission power is decreased, and vice versa. However, since it is better to estimate the direction along with the speed signal of the mobile station in the uplink, the TPC bit in the uplink is employed here.

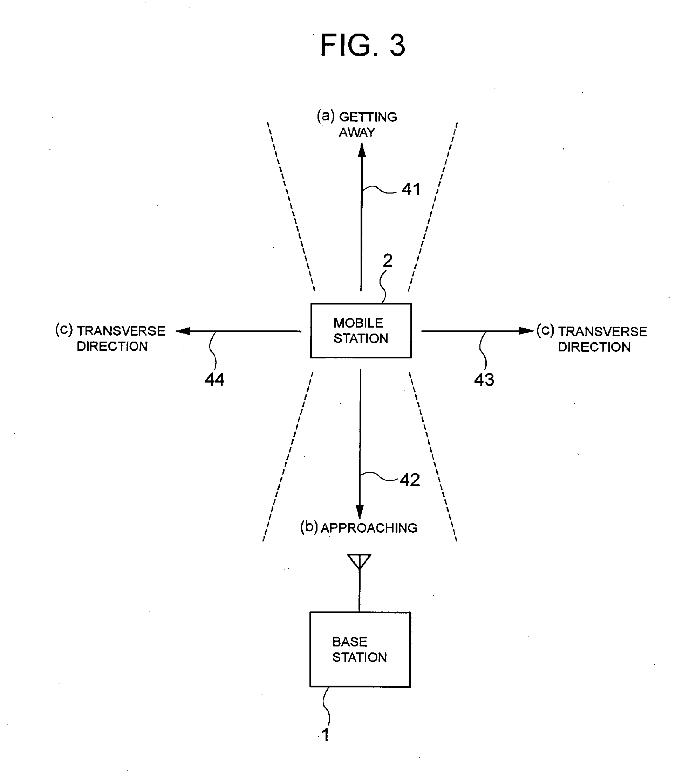

FIG. 3 is a diagram showing an estimation method for the travel direction of the mobile station according to one embodiment of the invention. In the estimation method for the travel direction of the mobile station according to one embodiment of the invention, several travel directions are decided from the known speed vector, as shown in FIG. 3.

In FIG. 3, the mobile station 2 transmits a number of requests (TPC bit='1') for increasing the transmission power, because the reception power decreases when the mobile station 2 becomes distant from the base station 1. Accordingly, the direction 41 is estimated in this case. Conversely, if the mobile station 2 transmits a number of requests with TPC='0', the direction 42 is estimated.

When the travel direction of the mobile station 2 is a transverse direction 43 or 44 (i.e., the percentages of '0' and '1' of received TPC bits are almost equal) to the base station 1, two travel directions are estimated, its estimated result being sent to the transmission position information deciding part 22.

Since the base station 1 is notified of the presence or absence of SHO state from the upper level layer, it can make aware of the SHO state or not. In this embodiment, the SHO determinating part 21 which can send this information to the transmission position information deciding part 22 is provided. Since it can also make aware of the sector for the SHO, the information of the neighboring sector with which the SHO is made is also included in the information to be transmitted to the table.

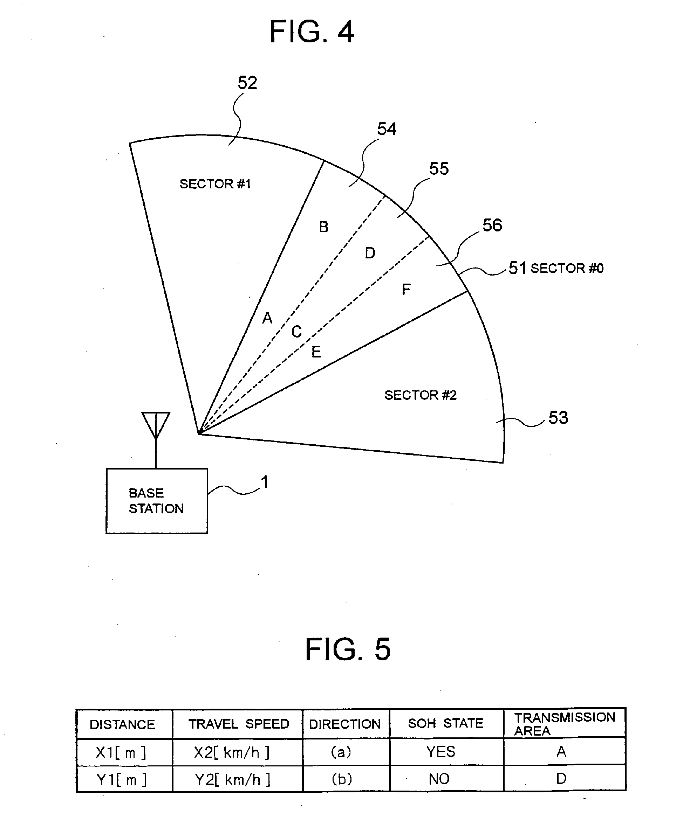

FIG. 4 is a diagram showing a transmission area according to one embodiment of the invention. FIG. 5 is a diagram showing a configuration example of a table installed in the transmission position information deciding part 22 of FIG. 1. Referring to FIGS. 4 and 5, the operation of the transmission position information deciding part 22 will be described below.

It is supposed that the table is installed in the transmission position information deciding part 22. Herein, the information inputted into the table includes distance, travel speed, travel direction and SHO state, as shown in FIG. 5. An example of the relationship between these four elements and the position information finally transmitted is shown in FIG. 5.

For the final transmission area, every sector is divided into several areas, and managed in the database. Because the SHO state is employed, this configuration is controlled for every sector. In FIG. 4, supposing a situation where the mobile station 2 communicates in the sector #0 (area 51), the sector #0 is divided into six areas (A to F), but the sector may be divided into more areas.

As a specific decision method, it is decided whether or not the distance information is near the base station 1. If the neighboring distance is decided, the area is any one of A, C and E in the example as shown in FIG. 4. For the SHO state, when the SHO is made in the sector #1 (area 52), A or B (area 54) is decided; when the SHO is made in the sector #2 (area 53), E or F (area 56) is decided; and when the SHO is not made, C or D (area 55) is decided, as shown in FIG. 4.

Finally, the travel speed and direction will be described below. For instance, if it is determined that the mobile station 2 is becoming distant from the base station 1 by estimating the area A and the position of the mobile station 2 in FIG. 4, A is decided when the travel speed is slow, and B is decided when it is fast.

For its reason, even if the position information far away from the current position is provided to the user who is as slow as the walking speed, it is unthinkable that the user is more convenient. Conversely, if the distant information is provided to the user who moves at the speed of car, it is considered that the user is more convenient. Accordingly, the position information finally provided is not limited to only one area, but plural pieces of information may be provided.

In the above way, when the position information to be transmitted to the mobile station 2 is decided by the transmission position information deciding part 22, the information is sent to the transmitting part 11, and then transmitted to the mobile station 2 as a downlink signal with data.

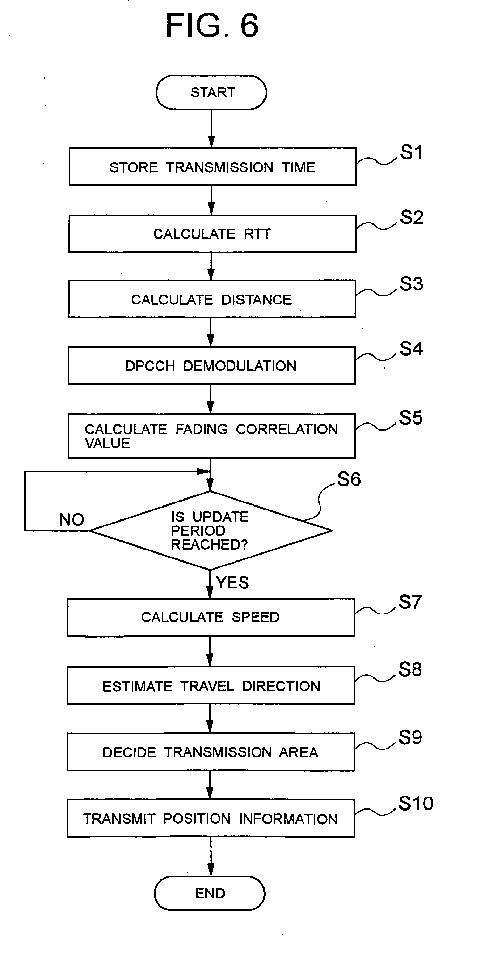

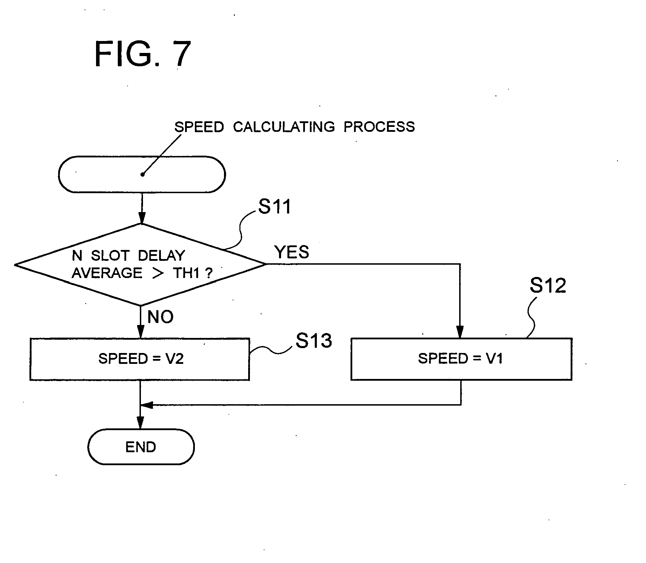

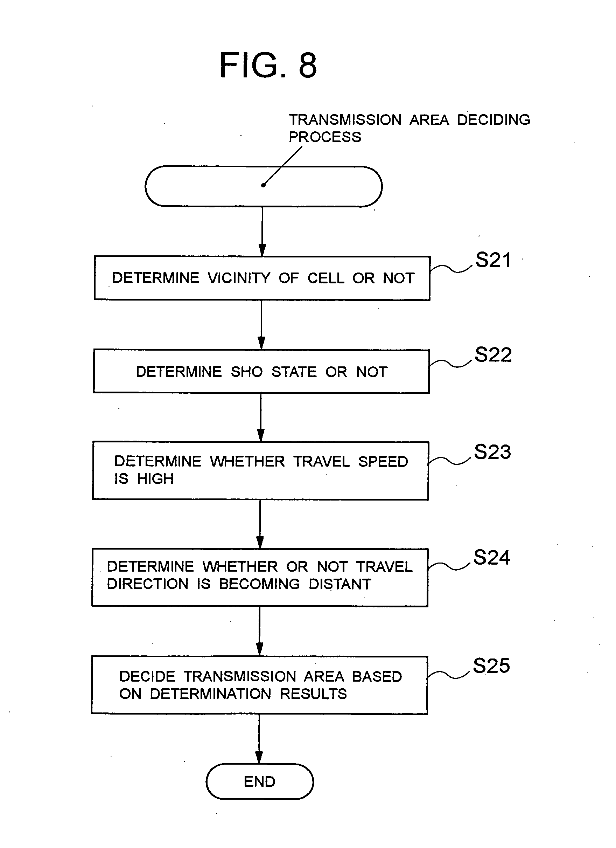

FIG. 6 is a flowchart showing the operation of the base station 1 according to one embodiment of the invention. FIG. 7 is a flowchart showing a speed calculating process of FIG. 6. FIG. 8 is a flowchart showing a transmission area deciding process of FIG. 6. Referring to FIGS. 1 to 8, the operation of the base station 1 according to one embodiment of the invention will be described below. When the base station 1 is a computer comprising a CPU (Central Processing Unit), not shown, a RAM (RandomAccessMemory), and a recording medium (mediumfor storing the program), the processes as shown in FIGS. 6 to 8 are performed on the CPU by loading the program in the recording medium into the RAM.

At first, the base station 1 stores the transmission time in the transmission time storing part 12 (step S1 in FIG. 6), and calculates the RTT from a delay profile in the RTT calculating part 14, employing a received signal from the mobile station 2 (step S2 in Fig. 6). After calculating the RTT, the base station 1 calculates the distance from the time stamp calculated at steps S1 and S2 in the distance calculating part 15 (step S3 in FIG. 6).

When the demodulation of DPCCH is completed in the DPCCH demodulating part 16 (step S4 in FIG. 6), the base station 1 calculates the fading correlation value in the channel estimate calculating part 17, employing the channel estimated value (step S5 in FIG. 6).

In this embodiment, the correlation value is calculated in every slot, to monitor whether or not a predetermined update period is reached (step S6 in FIG. 6). When the update period is reached, a speed calculating process is entered in the speed calculating part 18 (step S7 in FIG. 6).

As a specific speed calculating method, taking an example of calculating the correlation value between n slots, the speed calculating part 18 firstly compares the averaged correlation value with a threshold (step S11 in FIG. 7). The threshold at this time is th1. When this condition is met, the speed calculating part 18 decides the speed to be equal to V1 (step S12 in FIG. 7).

When this condition is not met, the speed calculating part 18 decides the speed to be equal to V2 (step S13 in FIG. 7). Though one threshold th1 is provided, and two travel speeds of the mobile station 2 are calculated in this example, although plural thresholds may be provided to set the travel speed more accurately.

The base station 1 stores the received TPC bit in the TPC command storing part 19, because decoding the TPC bit is completed at the time of DPCCH demodulation. The base station 1 enters a travel direction estimating process from the percentages of '0' and '1' of the stored bit sequence in the travel direction estimating part 20 (step S8 in FIG. 6). This travel direction estimating process is performed after the travel speed is calculated, because the estimated travel speed is also employed.

After estimating the distance, speed and travel direction, the base station 1 decides the optimal position information to be transmittedto themobile station 2 in the transmission position information deciding part 22, employing the table within the transmission position information deciding part 22 (step S8 in FIG. 6).

The optimal position information is decided from four determination elements, which include a determination of the distance between the base station 1 and the mobile station 2 (step S21 in FIG. 8), a determination of the SHO state (step S22 in FIG. 8), a determination of the travel speed (step S23 in FIG. 8) and a determination of the travel direction (S23 in FIG. 8) (step S25 in FIG. 8). The thresholds for the distance and travel speed used herein are d0 and v0, respectively. For the simplification of the explanation, a single threshold is shown, but plural thresholds may be set to provide the position information within the sector more accurately.

Finally, when the position information to be transmitted to the mobile station 2 is decided, the base station 1 enters a position information transmitting process in the transmitting part 11 (step S10 in FIG. 6), and transmits the position information from the transmitting part 11 via the downlink to the mobile station 2.

In this way, in this embodiment, since it is unnecessary to issue a positioning signal to plural base stations, the position information providing service can be expanded in the closed range of a single cell.

Though in the prior art, it is required that the displacement information of speed and direction is acquired from the upper level layer, based on a temporal change of the position information, in this embodiment those values can be estimated only on the physical channel to enable the information of speed and direction to be acquired simply.

In this embodiment, when the position of the mobile station 2 is managed by dividing each sector into areas, the SHO state is employed, whereby it is unnecessary to mount an AAA (Adaptive Array Antenna) in the base station 1, and it is easy to switch over from the current device.

Further, in this embodiment, since the base station 1 can discriminate whether the travel direction of the mobile station 2 is approaching or not, the position information providing service can be received in accordance with its own travel speed in the mobile station 2.

The present invention can be applied to the base station which can measure the RTT and the travel speed and direction of the mobile station. Accordingly, the invention can be applied to an apparatus dealing with the HSDPA (High-Speed Downlink Packet Access) and a radio communication system employing the modulation system for the next generation high speed radio packet access such as an OFDM (Orthogonal Frequency Division Multiplexing) in the W-CDMA radio communication system.

The present invention provides the effect that the position information providing service can be expanded in the closed range of a single cell.

## Claims

1. A position information providing system for providing the position information from a base station to a mobile station, wherein said base station comprises first estimation means for estimating said position information in a range of area within a sector.

2. The position information providing system according to claim 1, wherein said base station further comprises second estimation means for estimating a travel speed of said mobile station from a channel estimated value from said mobile station, and said first estimation means estimates said position information based on the estimated travel speed.

3. The position information providing system according to claim 1 or 2, wherein said base station further comprises third estimation means for estimating a travel direction of said mobile station employing a transmission power control bit from said mobile station, and said first estimation means estimates said position information based on the estimated travel direction.

4. The position information providing system according to any of claims 1 to 3, wherein said base station further comprises a database of position information in divided areas within every said sector, and said first estimation means estimates said position information in the range of area within said sector, employing said database.

5. A base station for providing the position information to a mobile station, comprising first estimation means for estimating said position information in a range of area within a sector.

6. The base station according to claim 5, further comprising second estimation means for estimating the travel speed of said mobile station from a channel estimated value of said mobile station, in which said first estimation means estimates said position information based on the estimated travel speed.

7. The base station according to claims 5 or 6, further comprising third estimation means for estimating a travel direction of said mobile station employing a transmission power control bit from said mobile station, in which said first estimation means estimates said position information based on the estimated travel direction.

8. The base station according to any of claims 5 to 7, further comprising a database of position information in divided areas within every said sector, in which said first estimation means estimates said position information in the range of area within said sector, employing said database.

9. A position information providing method for providing the position information from a base station to a mobile station, comprising a first step, on the side of said base station, of estimating said position information in a range of area within a sector.

10. The position information providing method according to claim 9, further comprising a second step, on the side of said base station, of estimating the travel speed of said mobile station from a channel estimated value from said mobile station, wherein said first step estimates said position information based on the estimated travel speed.

11. The position information providing method according to claim 9 or 10, further comprising a third step, on the side of said base station, of estimating the travel direction of said mobile station employing a transmission power control bit from said mobile station, wherein said first step estimates said position information based on the estimated travel direction.

12. The position information providing method according to any of claims 9 to 11, wherein said base station is provided with a database of position information in divided areas within every said sector, and said first step estimates said position information in the range of area within said sector, employing said database.

13. A program for implementing a position information providing method for providing the position information from a base station to a mobile station, wherein said program enables a computer on said base station to perform a process for estimating said position information in a range of area within a sector.

# FIG. 1

BASE STATION 1

TRANSMITTING PART 11

RECEIVING PART 13

TRANSMISSION TIME STORING PART 12

RTT CALCULATING PART 14

POSITION INFORMATION STORING PART 23

COMMUNICATION POSITION INFORMATION DECIDING PART 22

DISTANCE CALCULATING PART 15

SHO DETERMINATING PART 21

TRAVEL SPEED CALCULATING PART 18

CHANNEL ESTIMATE CALCULATING PART 17

DPCCH DEMODULATING PART 16

CONNECTED TO UPPER LEVEL LAYER

TRAVEL DIRECTION ESTIMATING PART 20

TPC COMMAND STORING PART 19

EP 1 617 693 A1

# FIG. 2

10bit

| DPCCH | Pilot | FBI | TFCI | TPC |
|-------|-------|-----|------|-----|

30          31    32    33

# FIG. 3

(a) GETTING
AWAY

41

2

(c) TRANSVERSE
DIRECTION

MOBILE
STATION

(c) TRANSVERSE
DIRECTION

44

43

42

(b) APPROACHING

BASE
STATION

1

# FIG. 4

# FIG. 5

| DISTANCE | TRAVEL SPEED | DIRECTION | SOH STATE | TRANSMISSION AREA |
|----------|--------------|-----------|-----------|-------------------|
| X1[ m ] | X2[ km/h ] | (a) | YES | A |
| Y1[ m ] | Y2[ km/h ] | (b) | NO | D |

# FIG. 6

START

STORE TRANSMISSION TIME — S1

CALCULATE RTT — S2

CALCULATE DISTANCE — S3

DPCCH DEMODULATION — S4

CALCULATE FADING CORRELATION VALUE — S5

NO ← IS UPDATE PERIOD REACHED? — S6

↓ YES

CALCULATE SPEED — S7

ESTIMATE TRAVEL DIRECTION — S8

DECIDE TRANSMISSION AREA — S9

TRANSMIT POSITION INFORMATION — S10

END

# FIG. 7

SPEED CALCULATING PROCESS

```
                    ┌──────────────┐
                    │              │
                    └──────────────┘
                           │
                           ▼                    S11
                    ╱             ╲
                   ╱  N SLOT DELAY  ╲    YES
                  ╱   AVERAGE > TH1 ? ╲──────────────────┐
                   ╲                 ╱                    │
                    ╲               ╱                     │
                       │ NO                               │      S12
                       ▼                                  ▼
              ┌─────────────────┐  S13          ┌─────────────────┐
              │   SPEED = V2    │               │   SPEED = V1    │
              └─────────────────┘               └─────────────────┘
                       │                                  │
                       ▼◄─────────────────────────────────┘
                  ┌─────────┐
                  │   END   │
                  └─────────┘
```

14

# FIG. 8

TRANSMISSION AREA DECIDING
PROCESS

DETERMINE VICINITY OF CELL OR NOT — S21

DETERMINE SHO STATE OR NOT — S22

DETERMINE WHETHER TRAVEL SPEED
IS HIGH — S23

DETERMINE WHETHER OR NOT TRAVEL
DIRECTION IS BECOMING DISTANT — S24

DECIDE TRANSMISSION AREA BASED
ON DETERMINATION RESULTS — S25

END

**European Patent Office** EUROPEAN SEARCH REPORT

Application Number

EP 05 01 5084

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | CA 2 490 946 A1 (INTERDIGITAL TECHNOLOGY CORPORATION) 8 January 2004 (2004-01-08) * paragraph [0015] - paragraph [0030] * ----- | 1,2,5,6, 8-10,13 | H04Q7/38 G01S5/00 |
| X | US 6 134 448 A (SHOJI ET AL) 17 October 2000 (2000-10-17) * column 4, line 1 - column 8, line 52 * ----- | 1,4,5,8, 9,12,13 | |
| X | US 5 943 610 A (ENDO ET AL) 24 August 1999 (1999-08-24) * column 5, line 24 - column 8, line 54 * ----- | 1,3,5,7, 9,11 | |

TECHNICAL FIELDS SEARCHED (Int.Cl.7)

H04Q
G01S

The present search report has been drawn up for all claims

| Place of search | Date of completion of the search | Examiner |
|---|---|---|
| Berlin | 7 November 2005 | LOPEZ PEREZ M C |

## ANNEX TO THE EUROPEAN SEARCH REPORT
## ON EUROPEAN PATENT APPLICATION NO.

EP 05 01 5084

This annex lists the patent family members relating to the patent documents cited in the above-mentioned European search report.
The members are as contained in the European Patent Office EDP file on
The European Patent Office is in no way liable for these particulars which are merely given for the purpose of information.

07-11-2005

| Patent document cited in search report | | | Publication date | Patent family member(s) | | | Publication date |
|---|---|---|---|---|---|---|---|
| CA 2490946 | A1 | | 08-01-2004 | AU | 2003245695 | A1 | 19-01-2004 |
| | | | | CN | 1663299 | A | 31-08-2005 |
| | | | | EP | 1527621 | A1 | 04-05-2005 |
| | | | | WO | 2004004377 | A1 | 08-01-2004 |
| | | | | US | 2004203905 | A1 | 14-10-2004 |
| US 6134448 | A | | 17-10-2000 | CN | 1212802 | A | 31-03-1999 |
| | | | | WO | 9733386 | A1 | 12-09-1997 |
| | | | | JP | 3231787 | B2 | 26-11-2001 |
| US 5943610 | A | | 24-08-1999 | JP | 2803626 | B2 | 24-09-1998 |
| | | | | JP | 9275373 | A | 21-10-1997 |

EPO FORM P0459

For more details about this annex : see Official Journal of the European Patent Office, No. 12/82